# EUROPEAN PATENT APPLICATION

(11) **EP 1 443 028 A1**
(43) Date of publication of application: **04.08.2004**
(21) Application number: 02802713.4
(22) Date of filing: 01.11.2002
(51) Int. Cl.: C04B 7/24, C04B 7/44, C04B 28/02

(54) **ALTERNATIVE TO PORTLAND CEMENT, METHOD FOR PRODUCING THE SAME, HARD WOOD CHIP CEMENT BOARD USING THE SAME AND METHOD FOR PRODUCING THE BOARD**

(30) Priority: 05.11.2001 JP 2001339562; 06.03.2002 JP 2002060812; 23.10.2002 JP 2002308800
(71) Applicant: SEKISUI CHEMICAL CO., LTD., Osaka-shi, Osaka 530-8565 (JP)
(72) Inventor: AOKI, Yukio, c/o Sekisui Chemical Co., Ltd., Tsukuba-shi, Ibaraki 300-4292 (JP); FURUMURA, Shuuma, c/o Sekisui Chemical Co., Ltd., Tsukuba-shi, Ibaraki 300-4292 (JP); TANAKA, Isao, c/o Sekisui Chemical Co., Ltd., Tsukuba-shi, Ibaraki 300-4292 (JP)
(74) Representative: Moinas, Michel
(86) International application number: PCT/JP2002/011432
(87) International publication number: WO 2003/040052

(57) **Abstract**

It is an object of the present invention to provide a portland cement substitute which shows no deterioration of various characteristics (e.g., bending strength) even when incorporated with chips or wastes discharged from a hard cemented chip board production process at 20% by weight or more to reutilize them, method for producing the same easily and economically, hard cemented chip board comprising the same, and method for producing hard cemented chip boards comprising the same.

The present invention provides a portland cement substitute comprising fine cement powder obtained by crushing and classifying at least one type of hard cemented chip board wastes and chips, or cured cement containing ettringite, wherein the cement powder is fired at 650 to 850°C for activation, method for producing the same, hard cemented chip board comprising the same, and method for producing hard cemented chip boards comprising the same.

## Description

### TECHNICAL FIELD

The present invention relates to a portland cement substitute, method for producing the same, hard cemented chip board comprising the same and method for producing the hard cemented chip board comprising the same, more particularly a portland cement substitute composed of fired/activated fine cement powder produced by crushing wastes or the like discharged from a hard cemented chip board production process to be used as a construction material, method for producing the same, hard cemented chip board comprising the same, and method for producing hard cemented chip boards comprising the same.

### BACKGROUND ART

One of known hard cemented chip boards is the one which is produced by curing a mixture of finely divided wood chips, cement and water after it is molded into a given shape.

This type of hard cemented chip board may suffer problems depending on wood types used, because they may release a component which can inhibit curing of the cement. This limits applicable wood types, or deteriorates chip board productivity because of extended curing time when such a wood type is used.

Some methods have been proposed to solve these problems. For example, Patent Document 1 (Japanese Patent Publication of examined applications No. 59-18339) discloses a method for producing hard cemented chip boards, where a cement composition containing portland cement, alumina cement, anhydrous gypsum or/and semihydrated gypsum is incorporated with finely divided wood chips and water, and the resultant mixture is cured under heating. This method uses the above-described cement composition, which has a property of accelerated curing when heated at a temperature beyond a certain level, to cure it before the wood component working to inhibit curing of cement is substantially eluted out. Therefore, this method widens the applicable wood types, and, at the same time, improves productivity and reduces production cost.

In production of the improved hard cemented chip board, chips and losses are produced during the production and fabrication processes. These chips, or wastes, which account for 10 to 25% by weight of the final product, have been discharged from the process for disposal as industrial wastes. As the environmental and anti-pollution regulations become more and more stringent, the waste disposal becomes more difficult, due to growing difficulties in finding the waste disposal sites and increased disposal cost.

Therefore, various proposals have been made to recycle these chips or wastes. For example, Patent Document 2 (Japanese Patent No. 2534403) proposes a method for producing hard cemented chip boards by curing, under heating, a starting mixture of a thermally curable component composed of alumina cement, and anhydrous gypsum or/and semihydrated gypsum as the main components, cement composition containing portland cement, finely crushed wood chips, and water, wherein the starting mixture for the hard cemented chip board is adjusted to keep portland cement in the cement composition at 2.5 times by weight of the thermally curable component or less, and wood wastes discharged from a hard cemented chip board production process at 20% by weight or less based on the total solids in the starting mixture. However, this proposal involves a problem that wood wastes content is limited to 20% by weight at the highest based on the total solids in the starting mixture to avoid deterioration of mechanical strength.

Another method for producing hard cemented chip boards similar to the above (e.g., disclosed by Patent Document 3: Japanese Patent No. 2578259) crushes wood wastes discharged from a hard cemented chip board production process, separates recovered wood chips and cement from each other, partly substitutes the wood chips and portland cement in the starting mixture for the hard cemented chip boards by recovered wood chips and cement, and cures the starting mixture under heating.

However, this proposal also involves a problem that total content of the recovered wood chips and cement is limited to 30% by weight at the highest based on the total solids in the starting mixture to avoid deterioration of mechanical strength by these recovered materials.

Moreover, there are proposals to recycle mortar or concrete wastes into a starting material for cement. For example, Patent Document 4 (Japanese Patent Laid-Open No. 6-285454) discloses a method which fires mortar or cement wastes at high temperature (1250 to 1400°C) for 1 to 4 hours to produce recycled cement clinker having a particle size of several cm, adds gypsum to the recycled cement clinker, and finely crushes the mixture to produce recycled cement having a particle size of around 10µm. However, this method comprises the firing step operating at high temperature above 1100°C, causing problems of (1) needing a large-size apparatus, because the rotary kiln's inside walls must be lined with refractory bricks, (2) consuming much fuel, and (3) needing an additional step of finely crushing the clinker, because crushed mortar or concrete wastes are granulated into the clinker having a particle size of several cm.

It is an object of the present invention to provide a portland cemen t substitute which shows no deterioration of various characteristics (e.g., bending strength) even when incorporated with chips or wastes discharged from a hard cemented chip board production process at 20% by weight or more to reutilize them, method for producing the same easily and economically, hard cemented chip board comprising the same, and method for producing hard cemented chip boards comprising the same, in order to solve the above problems involved in the methods proposed so far.

### SUMMARY OF THE INVENTION

The inventors of the present invention have found, after having extensively studied methods for reutilizing chips or the like discharged from a hard cemented chip board production process to solve the above problems, that the cement powder of finely crushed chips of hard cemented chip boards can be used as a portland cement substitute, when fired at 650 to 850°C, because the heat treatment activates the component lacking hydraulicity into the one of hydraulicity. The present invention is developed based on these findings.

The first aspect of the present invention provides a portland cement substitute comprising fine cement powder obtained by crushing and classifying at least one type of hard cemented chip board wastes and chips, or cured cement containing ettringite, wherein the cement powder is fired at 650 to 850°C for activation.

The second aspect of the present invention provides the portland cement substitute of the first aspect, wherein the cement powder contains portland cement, alumina cement, gypsum and lime. The third aspect of the present invention provides the portland cement substitute of the second aspect, wherein the cement powder further contains wood chips.

The fourth aspect of the present invention provides a method for producing the portland cement substitute of one of the first to third aspects comprising (I) a step of crushing and sieving at least one type of hard cemented chip board wastes and chips, or cured cement containing ettringite to produce the fine cement powder, and (II) a step of firing the cement powder produced by the step (I) for activation at 650 to 850°C by an agitation type firing furnace. The fifth aspect of the present invention provides the method of the fourth aspect for producing the portland cement substitute, wherein the firing conditions in the step (II) are 650 to 850°C, 30 minutes or more, and a reductive or oxidative atmosphere.

The sixth aspect of the present invention provides a hard cemented chip board comprising the portland cement substitute of one of the first to third aspect.

The seventh aspect of the present invention provides a method for producing the hard cemented chip board of the sixth aspect by curing, under heating, a mixture of cement composition containing portland cement, alumina cement, gypsum and lime incorporated with finely divided woody material and water, wherein 20 to 100% of the portland cement in the cement composition is the portland cement substitute of one of the first to third aspect. This method brings a merit of greatly simplifying the starting material supply facilities, e.g., silo.

### BRIEF DESCRIPTION OF THE DRAWINGS

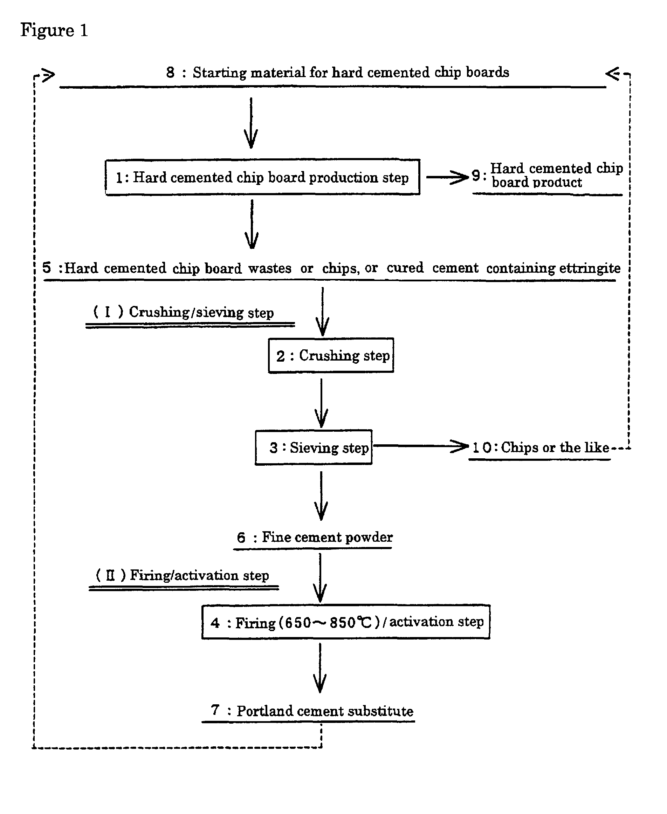

Figure 1 shows the flow sheet of the method for producing the portland cement substitute of the present invention.

### Notation

1 Hard cemented chip board production step
2 Crushing step
3 Sieving step
4 Firing/activation step
5 Hard cemented chip board wastes or chips, or cured cement containing ettringite
6 Fine cement powder
7 Portland cement substitute
8 Starting material for hard cemented chip boards
9 Hard cemented chip board product
10 Chips or the like

### DETAILED DESCRIPTION OF THE INVENTION

The present invention is described below in detail.

### 1. Portland Cement Substitute

The portland cement substitute of the present invention can be produced by the method comprising (I) a step of crushing and sieving at least one type of hard cemented chip board wastes and chips, or cured cement containing ettringite to produce the fine cement powder, and (II) a step of firing the cement powder produced by the step (I) for activation.

The process for producing the portland cement substitute of the present invention is described by referring to Figure 1 which shows the flow sheet for the production method. In the crushing/sieving step (I), the wastes or chips discharged from the step 1 for producing hard cemented chip boards, or cured cement containing ettringite 5 are/is treated by the crushing step 2 and sieving step 3, to obtain the fine cement powder 6. In the firing/activation step (II), the fine cement powder 6 is treated by the firing/activation step 4, to obtain the portland cement substitute 7 of the present invention. The portland cement substitute 7 thus produced partly or totally substitutes the portland cement for the mixture 8 comprising portland cement, alumina cement, gypsum, lime, water and wood chips, which is treated in the step for producing the hard cemented chip boards into the product 9. The wood chips or the like 10 rejected from the sieving step 3 are recycled back to the mixture 8 comprising portland cement, alumina cement, gypsum, lime, water and wood chips, to be used for producing the hard cemented chip boards.

Next, each step is described in detail.

### (I) Crushing/sieving step

The first step in the method for producing the portland cement substitute of the present invention is the step for obtaining the fine cement powder, i.e., crushing/sieving step (I), where at least one type of hard cemented chip board wastes and chips, or cured cement containing ettringite are/is crushed and sieved.

The starting materials for the portland cement substitute include hard cemented chip board wastes and chips, and cured cement containing ettringite. It is accepted that a hard cemented chip board production process produces wastes, e.g., chips and losses from the board fabrication step, which account for 10 to 25% by weight of the final product. The present invention can effectively utilize these wastes and chips discharged from a hard cemented chip board production process for disposal as industrial wastes. The other starting materials include spent hard cemented chip boards, and cured cement containing ettringite. Ettringite has a composition of calcium sulfoaluminate hydrate (3CaO·Al₂O₃·3CaSO₄· 30-32H₂O). It is a needle- or rod-shape crystal, normally one of the main hydrate products which form cured portland cement.

The present invention a step of crushing and sieving at least one type of hard cemented chip board wastes and chips, or cured cement containing ettringite, to obtain the fine cement powder. This crushing/classification step separates the fine cement powder from the wood chips and coarse cement powder. The fine cement powder is not limited. However, the preferably used one passes a metallic mesh of the standard sieve having a nominal size of 125µm (or 120 meshes), i.e., the one having a particle size of 40µm or less.

The fine cement powder may contain a small quantity of finely crushed wood chips, because it is subsequently fired for carbonization.

### (II) Firing/activation step

The fine cement powder obtained by the previous step (I) is fired for activation by an agitation type firing furnace in the step (II), i.e., firing/activation step.

The agitation type firing furnace is not limited. A rotary kiln being used for cement production processes or the like is generally preferable, because the starting materials are mixed with each other with rotation of the furnace body and efficiently heat-exchanged with the furnace walls.

In the present invention, the firing conditions, e.g., temperature, under which the fine cement powder is fired in an agitation type firing furnace are crucial and most important characteristics.

For the conditions under which the fine cement powder is fired, temperature of 650 to 850°C is essential, preferably 700 to 800°C. Firing time is 30 minutes or more, preferably 1 hour or more. The firing atmosphere is preferably reductive or oxidative. The fine cement powder produced by the previous step (I) is activated under the above conditions. In other words, the component lacking hydraulicity is activated to have hydraulicity.

As a result, the fired product of the cement powder from hard cemented chip board wastes or the like can be used as a portland cement substitute.

At near 600°C as firing temperature as one of the firing conditions, slacked lime (calcium hydroxide, Ca(OH)₂) is dehydrated into quick lime (calcium oxide, CaO). Quick lime produced in the fired product reacts with water, when mixed therewith, to generate a large quantity of heat, with the result that the fired product cannot be used as a portland cement substitute, because it cannot be formed into a hard cemented chip board. The cement composition containing the cement component partly substituted by the cement powder fired at 500 to 600°C for 1 hour is insufficient in serviceability and, after formed into a board, in mechanical properties, e.g., bending strength. Moreover, the cement powder fired at below 500°C is insufficient in hydraulicity to be used as a portland cement substitute.

Serviceability of a cement composition or the like, also referred to as pot life, means time period for which starting materials, when mixed with each other, keep suitable conditions for use, or fluidity suitable for molding, without undergoing curing.

When the cement powder is fired at around 900°C, on the other hand, calcium carbonate (CaCO₃) it contains is decomposed into quick lime (calcium oxide, CaO) while releasing carbon dioxide gas. As a result, quick lime produced in the fired cement powder reacts with water, when mixed therewith, to generate a large quantity of heat, with the result that the fired product cannot be used as a portland cement substitute, because it cannot be formed into a hard cemented chip board, as is the case with the one fired at near 600°C.

On the other hand, firing the cement powder at 650 to 850°C reproduces 3CaOSiO₂ and 2CaOSiO₂ as the portland cement components, CaOAl₂O₃ as the alumina cement component, CaSO₄ as the gypsum component and Ca(OH)₂ as the slack lime component, while producing no quick lime (calcium oxide, CaO), or only trace quantities thereof, if any. In other words, the heat treatment activates the cement powder to make it hydraulic. The cement composition containing the cement component partly substituted by the cement powder fired at 650°C or higher for 30 minutes has extended serviceability and improved mechanical properties, e.g., bending strength, after it is formed into a shape. As a result, the fired product of the cement powder at 650 to 850°C from hard cemented chip board wastes or the like can be used as a portland cement substitute.

Firing time as one of the firing conditions is preferably 30 minutes or more, more preferably 1 hour or more. The upper limit of firing time can be set in a range for improving productivity reliability.

The cement powder can totally substitute original portland cement, when fired in a reductive or oxidative atmosphere. A reductive firing condition is realized by burning the starting materials with air holes in a rotary kiln or the like closed, to change the atmosphere to an oxygen-deficient reductive state. An oxidative firing condition, on the other hand, is realized by burning the starting materials in an oxidative atmosphere containing a sufficient quantity of oxygen, with air holes in a rotary kiln or the like opened.

The firing conditions, oxidative or reductive, can be easily controlled not only by opening or closing air holes in a rotary kiln or the like but also by controlling concentrations of the gases flowing into the kiln. Therefore, the portland cement substitute exhibiting strength for specific purposes can be freely produced by controlling the firing atmosphere.

The method of the present invention for producing the portland cement substitute, firing the cement powder at 650 to 850°C as described above, has advantages over the conventional method which involves firing at 1000°C or higher, because it can save refractory lining for the agitation type rotary kiln, reduce kiln fuel, and also save the additional fine crushing step, because of the lower temperature it adopts to cause little granulation of the fired product. Therefore, it has advantages of solving the problems involved in the method of Patent Document 4 described above.

### 2. Hard Cement Chip Boards

The hard cemented chip board of the present invention uses the portland cement substitute as the starting material for the cement composition as the constituent for the substitute.

The cement composition which has been traditionally used for hard cemented chip boards is cured slowly even in the presence of water at normal temperature, but, when heated at beyond a certain temperature level, is cured by rapidly forming the needle-shape crystal of calcium sulfoaluminate (3CaO · Al₂O₃ · 3CaSO₄ · 30-32H20). Its composition is preferably portland cement: 50 to 96 parts, alumina cement: 25 to 2.0 parts, anhydrous or/and semihydrated gypsum: 15 to 1.5 parts, and slack lime: 10 parts or less, all by weight, more preferably portland cement: 80 to 96 parts, alumina cement: 10 to 2.0 parts, anhydrous or/and semihydrated gypsum: 5 to 1.5 parts, and slack lime: 10 parts or less.

The portland cement substitute of the present invention, being activated to be hydraulic as described above, can be used as a starting material for cement composition. In particular, portland cement substitute of the present invention is produced using hard cemented chip board wastes or the like as a starting material, and can partly or totally substitute the portland cement for the cement composition containing portland cement, alumina cement, gypsum and lime, which is used for producing hard cemented chip boards containing the similar wood chips.

The portland cement substitute of the present invention substitutes the original portland cement by 20 to 100% by weight, preferably 35 to 100%.

The portland cement which constitutes part of the cement composition is not limited. For example, common, high-early-strength, ultra high-early-strength or white portland cement may be used, as is the case with the conventional composition.

The cement composition may be incorporated further with one or more additives, e.g., water-proof agent, water repellent, foaming agent, corrosion inhibitor for the wood chips, and combustion inhibitor.

The conventional hard cemented chip board is produced by curing, under heating, a mixture of cement composition containing portland cement, alumina cement, gypsum and lime incorporated with finely divided woody material and water, as disclosed by Patent Document 1 described earlier. On the other hand, the hard cemented chip board of the present invention is produced by curing, under heating, a mixture of the cement composition incorporated with finely divided woody material and water, wherein the cement composition contains portland cement and/or the portland cement substitute of the present invention. The composition of the cement composition, woody material and water is not limited, and can be set in an optional range for specific purposes.

Any woody material may be used for the present invention. For example, wood chips separated from the hard cemented chip board wastes may be used. Wood chips may be added to reinforce or increase weight of the hard cemented chip board, and mixed with a variety of aggregates, fibrous material or the like.

### EXAMPLES

The present invention is described in detail by EXAMPLES and COMPARATIVE EXAMPLES, which by no means limit the present invention.

### [EXAMPLE 1]

The fine cement powder (average particle size: 40µm or less) of chips discharged from a hard cemented chip board production process was crushed and classified, and then fired in a rotary kiln (supplied by Daiwa Kogyo) at 700°C for 1 hour, to produce the fired product of the fine cement powder.

The cement composition was prepared by mixing 292 parts of high-early-strength portland cement with 158 parts of the above cement powder fired at 700°C, 1350 parts of standard sand and 247.5 parts of water, all parts by weight, and the resultant mixture was put in a 3-series mold frame, 40 by 40 by 160mm in size and capable of simultaneously forming 3 square pillar samples, where each pillar sample was formed by tamping the mixture 15 times. The fired cement accounted for 35% by weight of the portland cement, and water/cement ratio was 55% by weight.

Each pillar sample was wrapped by a film, left to stand in a room kept at 20°C for a day, released from the mold, and left to stand in a room kept at 20°C for a week for curing.

The sample thus cured for a week after it was released from the mold was analyzed for its compressive and bending strengths in accordance with JIS R-5201 (testing method for cement physical properties). The results are given in Table 1.

### [EXAMPLE 2]

The sample was prepared in the same manner as in EXAMPLE 1, except that the cement powder fired at 700°C was replaced by the one fired at 800°C for 1 hour, and analyzed for its compressive and bending strengths. The results are given in Table 1.

### [EXAMPLE 3]

The sample was prepared in the same manner as in EXAMPLE 1, except that the high-early-strength portland cement was replaced by 450 parts by weight of the cement powder fired at 700°C for 1 hour in a reductive atmosphere, and analyzed for its compressive and bending strengths. The results are given in Table 1.

### [EXAMPLE 4]

The sample was prepared in the same manner as in EXAMPLE 1, except that the high-early-strength portland cement was replaced by 450 parts by weight of the cement powder fired at 800°C for 1 hour or more in a reductive atmosphere, and analyzed for its compressive and bending strengths. The results are given in Table 1.

### [EXAMPLE 5]

The sample was prepared in the same manner as in EXAMPLE 1, except that the high-early-strength portland cement was replaced by 450 parts by weight of the cement powder fired at 800°C for 1 hour in an oxidative atmosphere, and analyzed for its compressive and bending strengths. The results are given in Table 1.

### [REFERENCE EXAMPLE]

The sample was prepared in the same manner as in EXAMPLE 1, except that 450 parts of high-early-strength portland cement was mixed 1350 parts of standard sand and 225 parts of water, all parts by weight, and analyzed for its compressive and bending strengths. The results are given in Table 1. The fired cement accounted for 0% by weight of the portland cement, and water/cement ratio was 50% by weight. The sample prepared in REFERENCE EXAMPLE, which was free of the fired fine cement powder, was to be compared with those prepared in EXAMPLES.

### [COMPARATIVE EXAMPLES 1 to 3]

An attempt was made to prepare the sample in each of COMPARATIVE EXAMPLES 1 to 3 in the same manner as in EXAMPLE 1, except that the fine cement powder was fired at 500, 600 or 900°C for 1 hour. These attempts, however, failed to prepare the samples, because of the exothermic reactions of the starting materials to generate an excessive quantity of heat. Table 1 gives only their compositions.

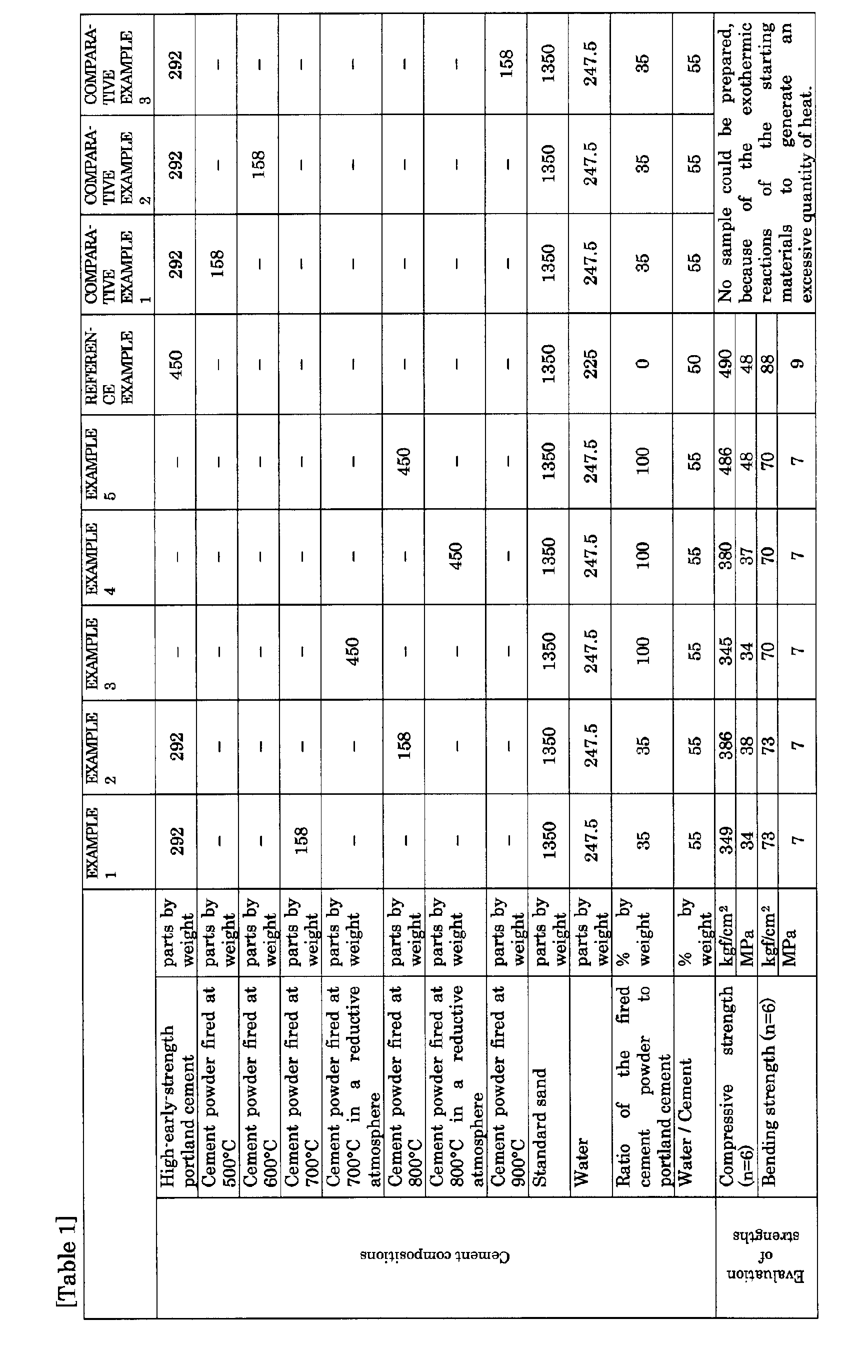

It is apparent from the results given in Table 1 that each of the samples prepared in EXAMPLES 1 and 2, with the portland cement substituted by the fired cement powder by 35% by weight, has a practically acceptable compressive and bending strength, 71 to 79% and 83% of the respective strength of the sample prepared in REFERENCE EXAMPLE, which is free of the fired cement powder.

Moreover, each of the samples prepared in EXAMPLES 3 to 5, with the portland cement totally substituted by the fired cement powder, has a practically acceptable compressive and bending strength, because each property is on a level with that of the sample with the portland cement substituted by the fired cement powder by 35% by weight, prepared in each of EXAMPLES 1 and 2.

Therefore, it is concluded that the fine cement powder produced by crushing and classifying chips or the like discharged from a hard cemented chip board production process can practically substitute portland cement by 20 to 100% by weight, when fired at 650 to 850°C for activation.

In each of COMPARATIVE EXAMPLES 1 to 3, an attempt was made to prepare the sample by firing the fine cement powder at 500, 600 or 900°C. These attempts, however, failed to prepare the samples, because of the exothermic reactions of the starting materials to generate an excessive quantity of heat. In other words, each cannot be used as a portland cement substitute.

In EXAMPLES 1 to 5, the hard cemented chip board was not evaluated to the extent of forming under heating. However, the cement powder activated by firing can be used as a starting material, i.e., as portland cement substitute, for a cement composition for hard cemented chip boards, because it can partly substitute the starting material for the hard cemented chip board to be formed under heating.

### INDUSTRIAL APPLICABILITY

The portland cement substitute of the present invention comprises fine cement powder obtained by crushing and classifying at least one type of hard cemented chip board wastes and chips, or cured cement containing ettringite, characterized by the cement powder fired at 650 to 850°C for activation. In particular, it can partly substitute portland cement as a starting material for cement composition for hard cemented chip boards.

Therefore, it can reutilize chips or wastes discharged from a hard cemented chip board production process, bringing an advantage of dispensing with necessity for disposal of the wastes or the like.

The method of the present invention for producing the portland cement substitute, firing the cement powder at 650 to 850°C for 30 minutes or more in a reductive or oxidative atmosphere, has advantages over the conventional method which involves firing at 1000°C or higher, because it can save refractory lining for the rotary kiln as an agitation type firing furnace, reduce kiln fuel, and also save the additional fine crushing step, because of the lower temperature it adopts to cause little granulation of the fired product. The method itself for producing the portland cement substitute brings advantages of dispensing with a sophisticated step, and freely producing the portland cement substitute exhibiting strength for specific purposes easily and economically by controlling concentrations of the gases for the firing atmosphere.

## Claims

1. A portland cement substitute comprising fine cement powder obtained by crushing and classifying at least one type of hard cemented chip board wastes and chips, or cured cement containing ettringite, wherein the cement powder is fired at 650 to 850°C for activation.

2. The portland cement substitute according to Claim 1, wherein said cement powder contains portland cement, alumina cement, gypsum and lime.

3. The portland cement substitute according to Claim 2, wherein said cement powder further contains wood chips.

4. A method for producing the portland cement substitute of one of Claims 1 to 3 comprising
(I) a step of crushing and sieving at least one type of hard cemented chip board wastes and chips, or cured cement containing ettringite to produce the fine cement powder, and
(II) a step of firing the cement powder produced by the step (I) for activation at 650 to 850°C by an agitation type firing furnace.

5. The method according to Claim 4 for producing the portland cement substitute, wherein the firing conditions in said step (II) are 650 to 850°C, 30 minutes or more, and a reductive or oxidative atmosphere.

6. A hard cemented chip board comprising the portland cement substitute according to one of Claims 1 to 3.

7. A method for producing the hard cemented chip board according to Claim 6 by curing, under heating, a mixture of cement composition containing portland cement, alumina cement, gypsum and lime incorporated with finely divided woody material and water, wherein 20 to 100% of the portland cement in the cement composition is the portland cement substitute according to one of Claims 1 to 3.
